# EUROPÄISCHE PATENTSCHRIFT

(11) **EP 2 986 391 B1**
(45) Veröffentlichungstag und Bekanntmachung des Hinweises auf die Patenterteilung: **23.10.2019**
(21) Anmeldenummer: 14715970.1
(22) Anmeldetag: 09.04.2014
(51) Int. Cl.: B04B 5/12, B04B 7/12, B01D 45/14, F01M 13/04

(54) **STRÖMUNGSELEMENT UND ABSCHEIDEVORRICHTUNG**
FLOW ELEMENT AND SEPARATION DEVICE
ÉLÉMENT D'ÉCOULEMENT ET DISPOSITIF DE SÉPARATION

(30) Priorität: 18.04.2013 DE 102013207058
(43) Veröffentlichungstag der Anmeldung: 24.02.2016
(73) Patentinhaber: ElringKlinger AG, 72581 Dettingen (DE)
(72) Erfinder: BUCK, Simon, 72555 Metzingen (DE); DWENGER, Stefan, 72762 Reutlingen (DE)
(74) Vertreter: Hoeger, Stellrecht & Partner Patentanwälte mbB
(86) Internationale Anmeldenummer: PCT/EP2014/057210
(87) Internationale Veröffentlichungsnummer: WO 2014/170192

(56) Entgegenhaltungen:
- EP-A1- 1 772 193
- DE-C- 349 710
- DE-C- 363 851
- US-A- 3 276 587
- US-A1- 2011 237 417

## Beschreibung

Die vorliegende Erfindung betrifft ein Strömungselement für eine Abscheidevorrichtung, insbesondere zum Abscheiden von Öl aus einem ölnebelhaltigen Gasstrom.

Strömungselemente für Abscheidevorrichtungen sind beispielsweise aus der DE 10 2010 048 484 A1 bekannt. Die DE 363 851 C als auch die US 2011/237417 A1 zeigen Strömungselemente entsprechend den Merkmalen des Oberbegriffs des Anspruchs 1.

Der vorliegenden Erfindung liegt die Aufgabe zugrunde, ein Strömungselement bereitzustellen, welches einfach aufgebaut und stabil mit weiteren baugleichen Strömungselementen verbindbar ist.

Diese Aufgabe wird erfindungsgemäß durch ein Strömungselement für eine Abscheidevorrichtung gelöst, welche einen scheibenförmigen Grundkörper umfasst, wobei der Grundkörper eine erste Seite und eine der ersten Seite gegenüberliegende zweite Seite umfasst, wobei die erste Seite und/oder die zweite Seite mehrere Kanäle umfasst, durch die im montierten Zustand des Strömungselements in der Abscheidevorrichtung ein Fluid von einer mittig in dem scheibenförmigen Grundkörper angeordneten Zentralöffnung des Grundkörpers nach außen oder von außen zu der mittig angeordneten Zentralöffnung führbar ist, wobei der Grundkörper zumindest auf der ersten Seite mehrere Aufnahmeabschnitte und zumindest auf der zweiten Seite mehrere Vorsprünge umfasst, wobei die Vorsprünge im montierten Zustand des Strömungselements mit den Aufnahmeabschnitten eines im Wesentlichen baugleichen, auf das Strömungselement aufgesetzten weiteren Strömungselements in Eingriff bringbar sind, wobei die erste Seite und die zweite Seite jeweils mehrere Vorsprünge und mehrere Aufnahmeabschnitte umfassen, wobei die Aufnahmeabschnitte in Kanalböden der Kanäle angeordnet sind.

Dadurch, dass das Strömungselement mit Vorsprüngen und Aufnahmeabschnitten versehen ist, können mehrere derartiger Strömungselemente besonders einfach aufeinander gestapelt und zuverlässig und stabil miteinander verbunden werden.

Vorteilhaft kann es sein, wenn der Grundkörper des Strömungselements beidseitig jeweils mehrere Kanäle umfasst.

Die Vorsprünge und die Aufnahmeabschnitte bilden vorzugsweise Nut-FederVerbindungen, insbesondere zum formschlüssigen, zentrierenden und/oder selbstsichernden Verbinden mindestens zweier Strömungselemente in mindestens zwei Raumrichtungen, insbesondere senkrecht zu einer Mittelachse des Grundkörpers.

Mittels der Vorsprünge und der Aufnahmeabschnitte sind die mindestens zwei Strömungselemente insbesondere verdrehsicher miteinander verbunden oder miteinander verbindbar.

Das Fluid ist vorzugsweise von der Zentralöffnung des Grundkörpers in bezüglich einer Mittelachse des Grundkörpers radialer Richtung nach außen oder von außen nach innen zur Zentralöffnung führbar. Der Strömungsweg des Fluids ist dabei vorzugsweise kein geradliniger Weg, sondern vielmehr ein gekrümmter Weg.

Die Mittelachse des Grundkörpers ist vorzugsweise eine Rotationsachse des Strömungselements im montierten Zustand desselben an oder in der Abscheidevorrichtung.

Bei der Erfindung ist vorgesehen, dass die erste Seite und die zweite Seite jeweils mehrere Vorsprünge und mehrere Aufnahmeabschnitte umfassen.

Vorteilhaft kann es sein, wenn die erste Seite und die zweite Seite jeweils mehrere Vorsprünge und mehrere Aufnahmeabschnitte umfassen, welche derart angeordnet sind, dass stets ein Vorsprung der einen Seite des Grundkörpers und ein Aufnahmeabschnitt der anderen Seite des Grundkörpers längs einer parallel zu einer Mittelachse des Strömungselements verlaufenden Richtung aufeinanderfolgend angeordnet sind.

Mehrere baugleiche Strömungselemente können hierdurch besonders einfach längs einer parallel zur Mittelachse des Strömungselements verlaufenden Richtung aufeinandergestapelt werden.

Es kann vorgesehen sein, dass die erste Seite des Grundkörpers und/oder die zweite Seite des Grundkörpers eine in radialer Richtung alternierende Folge von Vorsprüngen und Aufnahmeabschnitten umfasst.

Die Aufnahmeabschnitte sind in Kanalböden der Kanäle angeordnet und/oder ausgebildet.

Insbesondere kann vorgesehen sein, dass die Aufnahmeabschnitte Nuten oder Vertiefungen in den Kanalböden der Kanäle sind.

Die Vorsprünge und die Aufnahmeabschnitte sind vorzugsweise zumindest abschnittsweise komplementär zueinander ausgebildet. Hierdurch können mehrere baugleiche Strömungselemente besonders exakt relativ zueinander positioniert werden.

Bei einer Ausgestaltung der Erfindung kann vorgesehen sein, dass die im demontierten Zustand des Strömungselements vorhandenen Kanäle der ersten und/oder der zweiten Seite im montierten Zustand mittels Trennwänden zwischen den Kanälen eines weiteren Strömungselements längs einer Strömungsrichtung des Fluids in den Kanälen geteilt, insbesondere halbiert, sind.

Das Strömungselement ist vorzugsweise stapelbar ausgebildet, so dass aus mehreren baugleichen Strömungselementen ein Stapel von Strömungselementen herstellbar ist.

Die Vorsprünge des einen Strömungselements sind dabei vorzugsweise mit den Aufnahmeabschnitten eines weiteren Strömungselements in Eingriff oder in Eingriff bringbar.

Insbesondere kann vorgesehen sein, dass die Strömungselemente in sämtlichen radialen Richtungen bezüglich der Mittelachse formschlüssig und verdrehsicher miteinander verbunden sind.

Günstig kann es sein, wenn das Strömungselement derart stapelbar ausgebildet ist, dass aus mehreren baugleichen Strömungselementen ein koaxial zu einer gemeinsamen Mittelachse angeordneter Stapel von Strömungselementen herstellbar ist. Insbesondere sind sämtliche gestapelten Strömungselemente koaxial zu der gemeinsamen Mittelachse angeordnet.

Die gemeinsame Mittelachse des Stapels ist insbesondere eine Rotationsachse des Stapels im montierten Zustand einer Abscheidevorrichtung.

Es kann vorgesehen sein, dass die Kanäle gekrümmt ausgebildet sind, insbesondere einen kreisevolventenförmigen Verlauf aufweisen.

Unter einer Kreisevolvente und einem kreisevolventenförmigen Verlauf ist insbesondere eine ebene geometrische Kurve zu verstehen, welche einen Kreis als Evolute aufweist. Eine Kreisevolvente ist insbesondere eine Spirale mit konstantem Windungsabschnitt.

Ein kreisevolventenförmiger Verlauf ist insbesondere ein Verlauf, dessen Form zumindest näherungsweise einem Abschnitt einer Spirale mit konstantem Windungsabstand entspricht.

Die Kanäle sind insbesondere längs der Strömungsrichtung und/oder des Strömungswegs des Fluids verlaufend gekrümmt.

Alternativ oder ergänzend hierzu kann vorgesehen sein, dass die Vorsprünge gekrümmt ausgebildet sind, insbesondere einen kreisevolventenförmigen Verlauf aufweisen.

Insbesondere sind die Vorsprünge längs der Strömungsrichtung und/oder des Strömungswegs des Fluids verlaufend gekrümmt.

Ferner kann alternativ oder ergänzend hierzu vorgesehen sein, dass die Aufnahmeabschnitte gekrümmt ausgebildet sind, insbesondere einen kreisevolventenförmigen Verlauf aufweisen.

Insbesondere kann vorgesehen sein, dass die die Aufnahmeabschnitte bildenden Nuten oder Vertiefungen einen gekrümmten Verlauf, insbesondere einen kreisevolventenförmigen Verlauf, aufweisen.

Das gesamte Strömungselement ist vorzugsweise einstückig ausgebildet.

Bei einer Ausgestaltung der Erfindung ist vorgesehen, dass die Kanäle des Strömungselements einen senkrecht zu einer Strömungsrichtung des Fluids in den Kanälen genommenen Querschnitt aufweisen, welcher längs der Strömungsrichtung im Wesentlichen konstant ist.

Die Vorsprünge sind vorzugsweise freie Enden von Trennwänden, welche die Kanäle in einer Richtung voneinander trennen, die senkrecht zu einer Strömungsrichtung des Fluids in den Kanälen ausgerichtet ist.

Die Richtung, in welcher die Kanäle mittels der Trennwände getrennt werden, ist vorzugsweise ferner senkrecht zur Mittelachse des Strömungselements.

Das erfindungsgemäße Strömungselement eignet sich insbesondere zur Verwendung in einer Abscheidevorrichtung.

Die vorliegende Erfindung betrifft daher auch eine Abscheidevorrichtung, insbesondere zum Abscheiden einer Flüssigkeit, beispielsweise eines Ölnebels, aus einem Gasstrom.

Die erfindungsgemäße Abscheidevorrichtung weist vorzugsweise einzelne oder mehrere der im Zusammenhang mit dem erfindungsgemäßen Strömungselement beschriebenen Merkmale und/oder Vorteile auf.

Vorzugsweise umfasst die Abscheidevorrichtung einen Stapel aus mehreren erfindungsgemäßen, insbesondere mehreren baugleichen erfindungsgemäßen, Strömungselementen.

Vorteilhaft kann es sein, wenn die Abscheidevorrichtung mindestens ein Endplattenelement umfasst, welches den Stapel aus Strömungselementen in einer parallel zu einer Mittelachse der Strömungselemente verlaufenden Richtung begrenzt.

Das mindestens eine Endplattenelement umfasst vorzugsweise eine im montierten Zustand der Abscheidevorrichtung dem Stapel aus Strömungselementen zugewandte Seite, welche im Wesentlichen dieselbe Form aufweist wie die dem mindestens einen Endplattenelement abgewandte Seite eines an das Endplattenelement angrenzenden Strömungselements.

Günstig kann es sein, wenn die Abscheidevorrichtung zwei Endplattenelemente umfasst, welche den Stapel aus Strömungselementen in einer parallel zu einer Mittelachse der Strömungselemente verlaufenden Richtung zu beiden Seiten des Stapels begrenzen.

Die Abscheidevorrichtung umfasst vorzugsweise ein Verbindungselement, mittels welchem die zwei Endplattenelemente im montierten Zustand miteinander verbunden und die Strömungselemente zwischen den Endplattenelementen aufeinandergedrückt werden.

Mittels des Verbindungselements kann vorzugsweise ein Formschluss zwischen den Strömungselementen in bezüglich der Mittelachse radialer Richtung hergestellt und/oder aufrechterhalten werden.

Das Verbindungselement kann beispielsweise eine Schraubverbindung sein.

Es kann vorgesehen sein, dass das Verbindungselement sich längs der Mittelachse der Strömungselemente, insbesondere längs der gemeinsamen Mittelachse, erstreckt.

Alternativ oder ergänzend hierzu kann vorgesehen sein, dass das Verbindungselement durch ein Gehäuse der Abscheidevorrichtung gebildet ist. Vorzugsweise werden die Endplattenelemente mittels des Gehäuses auf die Strömungselemente gedrückt. Ein separates Element, welches sich durch die Zentralöffnungen der Strömungselemente hindurcherstreckt, insbesondere eine Welle, kann hierdurch vorzugsweise entbehrlich sein.

Mittels der Zentralöffnungen der Strömungselemente ist vorzugsweise ein sich längs einer Mittelachse erstreckender Zentralkanal der Abscheidevorrichtung gebildet.

Der Zentralkanal ist beispielsweise im Wesentlichen zylinderförmig oder hohlzylinderförmig (insbesondere im Falle der Verwendung einer Welle) ausgebildet.

Alternativ hierzu kann vorgesehen sein, dass der Zentralkanal im Wesentlichen konusförmig ausgebildet ist.

Die Konusform des Zentralkanals kann sich insbesondere durch geeignete Ausgestaltung und/oder Anordnung der Strömungselemente ergeben.

Alternativ oder ergänzend hierzu kann vorgesehen sein, dass der Stapel aus Strömungselementen nachbearbeitet wird, um beispielsweise eine Konusform des Zentralkanals zu ermöglichen.

Durch einen konusförmigen Zentralkanal kann insbesondere die Anströmung der einzelnen Strömungselemente optimiert werden.

Ferner können das erfindungsgemäße Strömungselement und/oder die erfindungsgemäße Abscheidevorrichtung einzelne oder mehrere der nachfolgend beschriebenen Merkmale und/oder Vorteile aufweisen:
Das Strömungselement weist vorzugsweise eine durch die Vorsprünge und die Aufnahmeabschnitte gebildete Nut-Feder-Verbindung auf. Die einzelnen Strömungselemente können hierdurch besonders einfach und zuverlässig gestapelt und dabei sicher relativ zueinander positioniert, insbesondere zentriert, und festgelegt werden.

Mittels des erfindungsgemäßen Strömungselements werden vorzugsweise Unwuchten vermieden. Der Rundlauf der Abscheidevorrichtung, insbesondere des Stapels aus Strömungselementen, wird hierdurch vorzugsweise verbessert.

Vorzugsweise ist vorgesehen, dass die im Benutzungszustand der Abscheidevorrichtung rotierenden Bauteile, insbesondere der Stapel aus Strömungselementen, die Endplattenelemente und/oder eine Antriebswelle, durch einfaches Stapeln und Verbinden in einen einbaufertigen Zustand gebracht werden. Ein zusätzliches, insbesondere nachträgliches, Wuchten ist vorzugsweise entbehrlich.

Die im montierten Zustand der Abscheidevorrichtung gebildeten Kanäle weisen insbesondere einen rechteckigen Querschnitt von beispielsweise ungefähr 5 mm mal ungefähr 0,5 mm auf.

Es kann ferner vorgesehen sein, dass die im montierten Zustand der Abscheidevorrichtung gebildeten Kanäle einen trapezförmigen oder parallelogrammförmigen Querschnitt aufweisen.

Ein separates Element zur Positionierung der Strömungselemente relativ zueinander ist vorzugsweise entbehrlich.

Die Endplattenelemente bilden vorzugsweise Deckel für die Strömungselemente, insbesondere für den Stapel aus Strömungselementen.

Weitere Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Schnittdarstellung einer ersten Ausführungsform einer Abscheidevorrichtung, welche einen Stapel aus baugleichen Strömungselementen umfasst;
- Fig. 2: eine schematische perspektivische, teilweise geschnittene Darstellung zweier Strömungselemente der Abscheidevorrichtung aus Fig. 1;
- Fig. 3: einen vergrößerten schematischen Querschnitt durch die Strömungselemente aus Fig. 2;
- Fig. 4: einen der Fig. 1 entsprechenden schematischen Querschnitt durch die Abscheidevorrichtung zur Illustration der Funktionsweise der Abscheidevorrichtung; und
- Fig. 5: eine der Fig. 1 entsprechende schematische Darstellung einer zweiten Ausführungsform einer Abscheidevorrichtung, bei welcher eine wellenlose Verbindung der Strömungselemente miteinander vorgesehen ist.

Gleiche oder funktional äquivalente Elemente sind in sämtlichen Figuren mit denselben Bezugszeichen versehen.

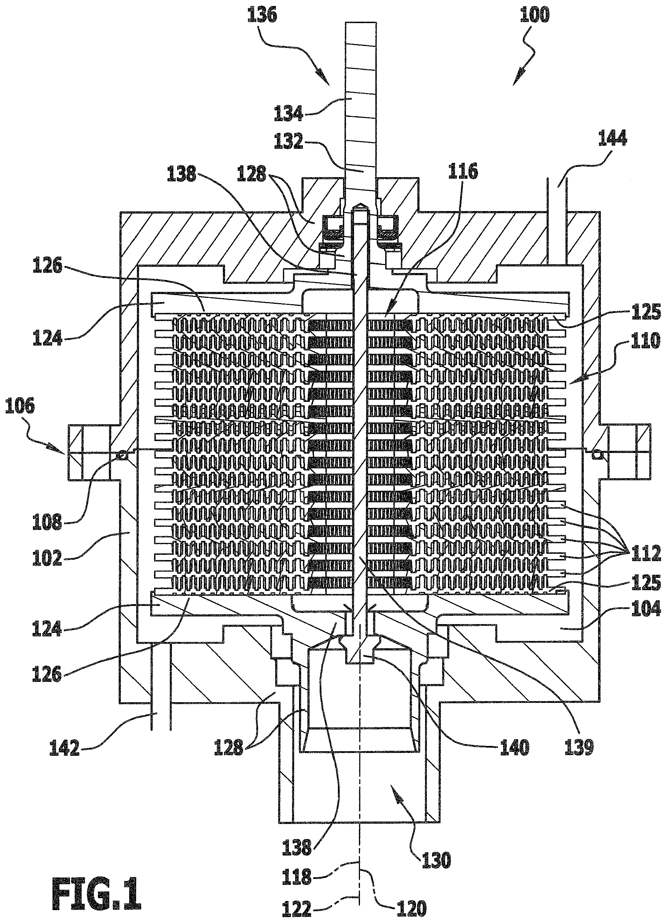

Eine in den Fig. 1 bis 4 dargestellte, als Ganzes mit 100 bezeichnete Abscheidevorrichtung dient beispielsweise zur Aerosolabtrennung bei der spanenden Werkstoffbearbeitung im Maschinenbau und/oder zur Abscheidung von Ölnebel aus einem Gasstrom.

Die Abscheidevorrichtung 100 dient insbesondere zum Abscheiden von Ölnebel aus Blowby-Gasen eines Verbrennungsmotors.

Die Abscheidevorrichtung 100 umfasst ein Gehäuse 102, welches einen Innenraum 104 der Abscheidevorrichtung 100 umgibt.

Das Gehäuse 102 ist beispielsweise zweiteilig ausgebildet, so dass der Innenraum 104 insbesondere zur Montage der Abscheidevorrichtung 100 einfach zugänglich ist.

Mittels eines Verbindungsabschnitts 106 und einer (nicht dargestellten) Schraubverbindung und/oder Schweißverbindung, insbesondere durch ein Reibschweißverfahren (beispielsweise ein Vibrations-, Rotations- oder Ultraschallschweißverfahren) oder ein Heißgasschweißverfahren, können die zwei Teile des Gehäuses 102 insbesondere zur einfachen Montage der Abscheidevorrichtung 100 miteinander verbunden werden.

Eine im Bereich des Verbindungsabschnitts 106 angeordnete Dichtung 108 des Gehäuses 102 verhindert ein unerwünschtes Austreten von Gas und/oder Flüssigkeit aus dem Innenraum 104 der Abscheidevorrichtung 100 im montierten Zustand der Abscheidevorrichtung 100.

Der Innenraum 104 der Abscheidevorrichtung 100 ist insbesondere im Wesentlichen zylindrisch ausgebildet und dient der Aufnahme eines Stapels 110 aus Strömungselementen 112.

Die Strömungselemente 112 sind im Wesentlichen scheibenförmig ausgebildet und weisen jeweils eine beispielsweise kreisrunde Zentralöffnung 114 auf.

Mittels der Zentralöffnungen 114 der Strömungselemente 112 ist ein Zentralkanal 116 in dem Stapel 110 aus Strömungselementen 112 gebildet.

Der Zentralkanal 116 ist im Wesentlichen zylindrisch ausgebildet und somit rotationssymmetrisch um eine Symmetrieachse 118, welche eine Mittelachse 120 der Strömungselemente 112 ist.

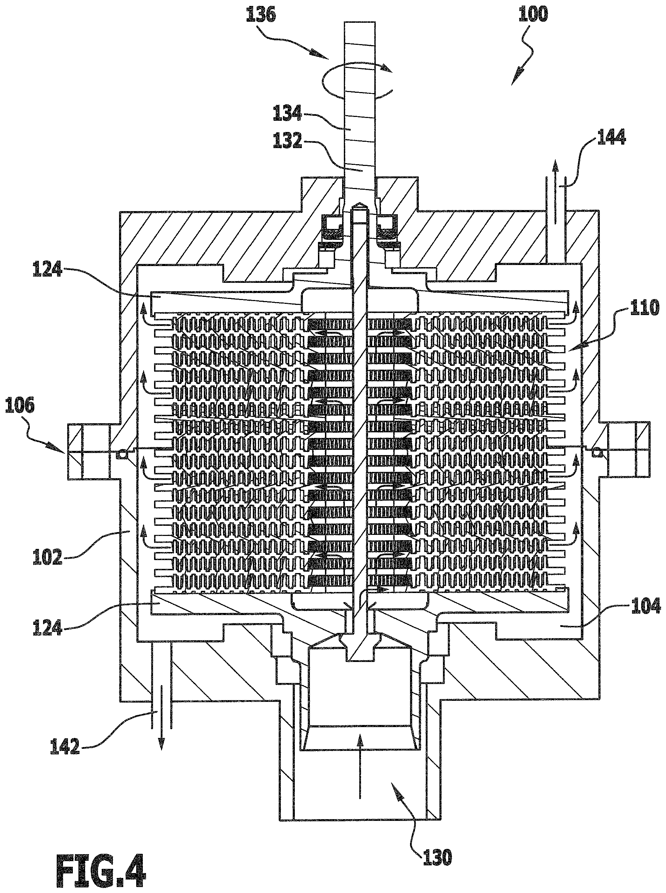

In dem in den Fig. 1 und 4 dargestellten montierten Zustand der Abscheidevorrichtung 100 ist der Stapel 110 aus Strömungselementen 112 um die Mittelachse 120 rotierbar. Die Mittelachse 120 ist somit eine Rotationsachse 122 der Strömungselemente 112, insbesondere des Stapels 110 aus Strömungselementen 112.

In einer parallel zur Mittelachse 120 verlaufenden Richtung wird der Stapel 110 aus Strömungselementen 112 beidseitig mit jeweils einem Endplattenelement 124 begrenzt. Die Endplattenelemente 124 umfassen jeweils einen Anlageabschnitt 126, mit welchem die Endplattenelemente 124 an den Strömungselementen 112 anliegen, und einen Lagerabschnitt 128, mit welchem die Endplattenelemente 124 drehbar an dem Gehäuse 102 gelagert sind.

Eine den Strömungselementen 112 zugewandte Seite 125 eines jeden Endplattenelements 124 weist eine Form auf, welche der Form einer dem Endplattenelement 124 abgewandten Seite 150, 152 eines an das jeweilige Endplattenelement 124 angrenzenden Strömungselements 112 entspricht.

Eines der Endplattenelemente 124 ist Bestandteil eines Einlassabschnitts 130 der Abscheidevorrichtung 100.

Durch den Einlassabschnitt 130 kann dem Innenraum 104, insbesondere dem Zentralkanal 116 des Stapels 110 aus Strömungselementen 112, beispielsweise ein Aerosol zugeführt werden.

Das weitere der Endplattenelemente 124 umfasst einen Antriebsabschnitt 132, insbesondere eine Antriebswelle 134, mittels welchem das Endplattenelement 124 und somit auch der Stapel 110 aus Strömungselementen 112 mit einer Antriebsvorrichtung 136 koppelbar oder gekoppelt ist.

Mittels der Antriebsvorrichtung 136 kann über das den Antriebsabschnitt 132 aufweisende Endplattenelement 124 insbesondere eine Rotationsbewegung auf den Stapel 110 aus Strömungselementen 112 übertragen werden.

Bei der in den Fig. 1 und 4 dargestellten Ausführungsform der Abscheidevorrichtung 100 umfassen die Endplattenelemente 124 zudem jeweils einen Verbindungsabschnitt 138, mittels welchem die Endplattenelemente 124 durch den Zentralkanal 116 hindurch verbindbar sind.

Insbesondere ist dabei vorgesehen, dass ein zentrales Verbindungselement 139, beispielsweise eine Schraube oder Gewindestange 140, sich von dem Verbindungsabschnitt 138 des einen Endplattenelements 124 bis zu dem Verbindungsabschnitt 138 des weiteren Endplattenelements 124 erstreckt und die Endplattenelemente 124 aufeinander zu zieht oder drückt. Die Strömungselemente 112 werden somit zwischen die Endplattenelemente 124 eingespannt.

Das Gehäuse 102 der Abscheidevorrichtung 100 umfasst eine Drainageöffnung 142, durch welche das mittels der Abscheidevorrichtung 100 abgeschiedene Fluid, insbesondere Öl, aus dem Innenraum 104 entfernt werden kann, insbesondere abfließen kann.

Ferner umfasst das Gehäuse 102 der Abscheidevorrichtung 100 einen Auslassabschnitt 144, durch welchen das mittels der Abscheidevorrichtung 100 gereinigte Gas den Innenraum 104 der Abscheidevorrichtung 100 verlassen kann.

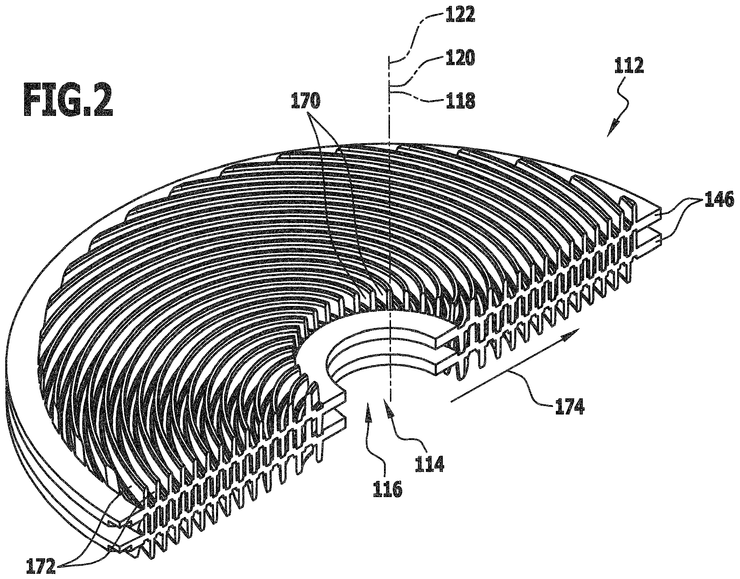

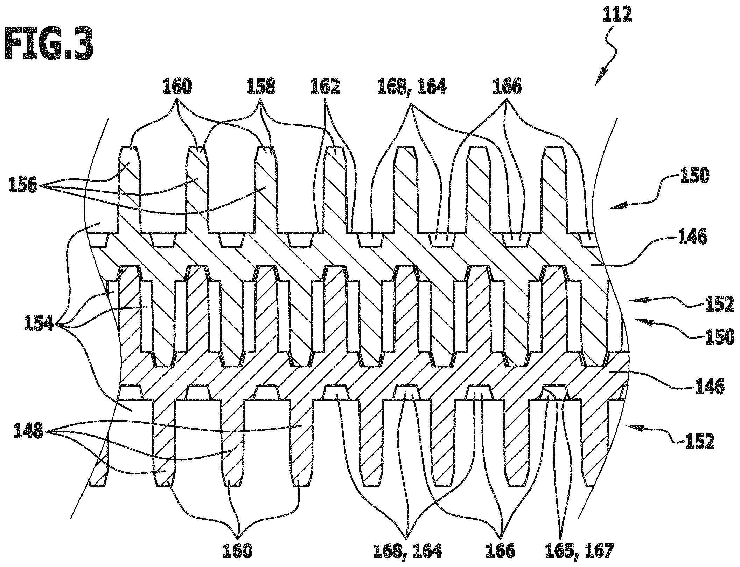

Wie insbesondere den Fig. 2 und 3 zu entnehmen ist, umfasst jedes Strömungselement 112 einen im Wesentlichen scheibenförmigen, zumindest näherungsweise um die Rotationsachse 122 rotationssymmetrischen Grundkörper 146, welcher mit einer Vielzahl von sich parallel zur Mittelachse 120 erstreckenden Wänden 148 versehen ist.

Sowohl eine erste Seite 150 als auch eine der ersten Seite 150 gegenüberliegende zweite Seite 152 des Grundkörpers 146 ist dabei mit solchen Wänden 148 versehen.

Mittels der Wände 148 sind Kanäle 154 der Strömungselemente 112 gebildet.

Die Wände 148 sind somit Trennwände 156 zwischen den Kanälen 154.

Dem Grundkörper 146 abgewandte freie Enden 158 der Trennwände 156 sind als Vorsprünge 160 ausgebildet.

Der Bereich des Grundkörpers 146 zwischen den Trennwänden 156 ist ein Kanalboden 162 der Kanäle 154.

Die Kanalböden 162 sind mit Vertiefungen 164, beispielsweise Nuten 166, versehen.

Die Vertiefungen 164 bzw. Nuten 166 bilden Aufnahmeabschnitte 168 für die Vorsprünge 160.

Die Aufnahmeabschnitte 168, insbesondere die Vertiefungen 164 bzw. die Nuten 166, sind vorzugsweise in einer Tiefenrichtung verjüngend ausgebildet.

Die Aufnahmeabschnitte 168 umfassen hierzu vorzugsweise Entformungsschrägen 165 oder Einführschrägen 167, welche schräg zur Mittelachse 120 ausgerichtet sind.

Die Entformungsschrägen 165 bzw. die Einführschrägen 167 werden insbesondere durch Seitenwandungen der Aufnahmeabschnitte 168 gebildet.

Die Vorsprünge 160 sind vorzugsweise zu ihrem dem Grundkörper 146 abgewandten Ende 158 hin verjüngend ausgebildet, insbesondere im Wesentlichen komplementär zu der Form der Aufnahmeabschnitte 168.

Durch die verjüngende Ausgestaltung der Aufnahmeabschnitte 168 und der Vorsprünge 160 können die Strömungselemente 112 besonders genau relativ zueinander positioniert und stabil und zuverlässig miteinander verbunden werden.

Sowohl die erste Seite 150 als auch die zweite Seite 152 des Grundkörpers 146 ist mit solchen Vorsprüngen 160 und solchen Aufnahmeabschnitten 168 versehen.

Die Vorsprünge 160 und die Aufnahmeabschnitte 168 sind dabei derart verteilt angeordnet, dass bei einem einfachen Aufeinanderstapeln baugleicher Strömungselemente 112 die Vorsprünge 160 auf der ersten Seite 150 eines Strömungselements 112 in die Aufnahmeabschnitte 168 auf der zweiten Seite 152 eines weiteren Strömungselements 112 eingreifen. Gleichzeitig greifen vorzugsweise die Vorsprünge 160 auf der zweiten Seite 152 des weiteren Strömungselements 112 in die Aufnahmeabschnitte 168 auf der ersten Seite 150 des ersten Strömungselements 112 ein.

Die Trennwände 156, die Kanäle 154, die Vorsprünge 160 und die Aufnahmeabschnitte 168 weisen einen im Wesentlichen kreisevolventenförmigen Verlauf auf.

Somit sind kreisevolventenförmige Kanäle 154 gebildet, welche sich von einem der Zentralöffnung 114 zugewandten inneren Ende 170 bis zu einem der Zentralöffnung 114 abgewandten äußeren Ende 172 erstrecken.

Mittels der Kanäle 154 kann somit das durch den Einlassabschnitt 130 zugeführte Aerosol von dem Zentralkanal 116 in bezüglich der Mittelachse 120 radialer Richtung 174 nach außen geführt werden.

Die vorstehend beschriebene Abscheidevorrichtung 100 funktioniert wie folgt:
Mittels der Antriebsvorrichtung 136 wird der Stapel 110 aus Strömungselementen 112 über den Antriebsabschnitt 132 des Endplattenelements 124 in Rotation versetzt.

Der Stapel 110 aus Strömungselementen 112 fungiert dadurch als Zentrifuge, mittels welcher schwere Bestandteile, insbesondere Tröpfchen, eines Aerosols abgeschieden werden können.

Das beispielsweise als Blowby-Gas eines Verbrennungsmotors ausgebildete Aerosol wird über den Einlassabschnitt 130 der Abscheidevorrichtung 100 durch das dem Einlassabschnitt 130 zugewandt angeordnete Endplattenelement 124 hindurchgeleitet und dem Zentralkanal 116 des Stapels 110 aus Strömungselementen 112 zugeführt.

An den inneren Enden 170 der Kanäle 154 tritt das Aerosol in die Kanäle 154 ein und wird durch die Kanäle 154 in radialer Richtung 174 bis zu den äußeren Enden 172 der Kanäle 154 geführt. Aufgrund der Rotation und der Formgebung der Kanäle 154 erfolgt eine Abscheidung der Tröpfchen des Aerosols an den Trennwänden 156. Die Tröpfchen werden schließlich in radialer Richtung 174 in Richtung des Gehäuses 102 beschleunigt und sinken dann zu Boden.

Über die Drainageöffnung 142 kann die so separierte Flüssigkeit, insbesondere Öl, aus dem Innenraum 104 der Abscheidevorrichtung 100 entfernt werden.

Das von dem Öl befreite Gas verlässt den Innenraum 104 über den Auslassabschnitt 114 des Gehäuses 102 der Abscheidevorrichtung 100.

Mittels der beschriebenen Abscheidevorrichtung 100 kann somit insbesondere ein mit Tröpfchen beladener Gasstrom gereinigt werden.

Alternativ zu der vorstehend beschriebenen Funktionsweise kann auch vorgesehen sein, dass die Abscheidevorrichtung 100 in umgekehrter Richtung beispielsweise mit einem Aerosol durchströmt wird.

Das Aerosol strömt dann an dem als Auslassabschnitt 144 bezeichneten Abschnitt des Gehäuses 102 der Abscheidevorrichtung 100 in den Innenraum 104 ein. Durch die Kanäle 154 strömt das Aerosol dann entgegen der radialen Richtung 174 von außen nach innen zu der Zentralöffnung 114. Während des Durchströmens der Kanäle 154 werden schwerere Bestandteile, insbesondere Tröpfchen, des Aerosols abgeschieden, so dass ein gereinigter Gasstrom durch den Zentralkanal 116 und den als Einlassabschnitt 130 bezeichneten Abschnitt aus dem Innenraum 104 des Gehäuses 102 der Abscheidevorrichtung 100 entfernt werden kann.

Auch bei dieser Funktionsweise der Abscheidevorrichtung 100 werden die abgeschiedenen Bestandteile des Aerosols durch die Drainageöffnung 142 aus dem Innenraum 104 des Gehäuses 102 entfernt.

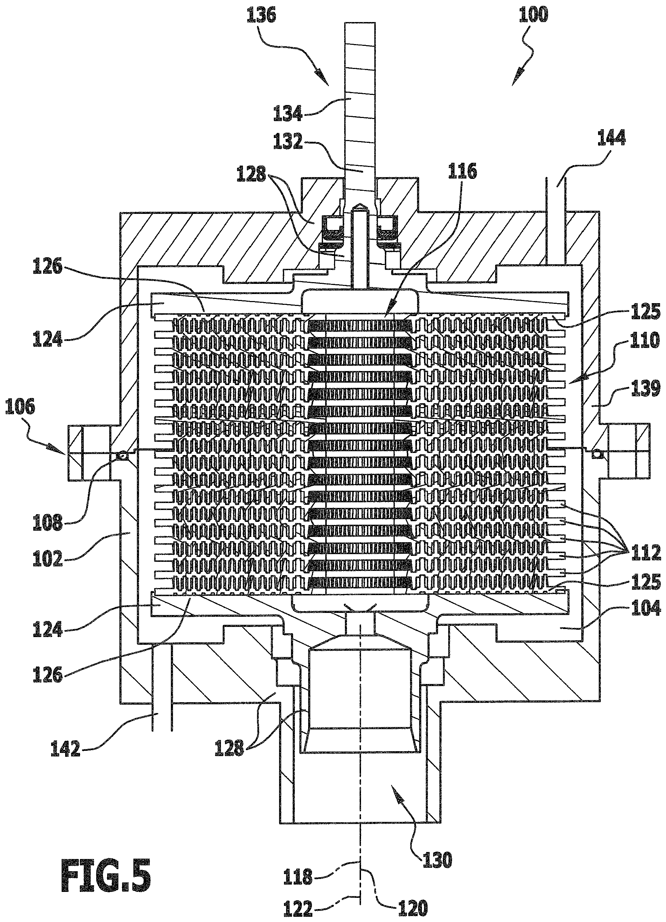

Eine in Fig. 5 dargestellte zweite Ausführungsform einer Abscheidevorrichtung 100 unterscheidet sich von der in den Fig. 1 bis 4 dargestellten ersten Ausführungsform im Wesentlichen dadurch, dass keine Gewindestange 140 zum Verbinden der Endplattenelemente 124 vorgesehen ist.

Bei der in Fig. 5 dargestellten Ausführungsform der Abscheidevorrichtung 100 dient, vorzugsweise ausschließlich, das Gehäuse 102 dazu, die Endplattenelemente 124 gegen den Stapel 110 aus Strömungselementen 112 zu pressen und somit eine unerwünschte Relativbewegung der Endplattenelemente 124 und/oder der Strömungselemente 112 relativ zueinander zu verhindern.

Insbesondere sind hierzu die Lagerabschnitte 128 des Gehäuses 102, an welchen die Lagerabschnitte 128 der Endplattenelemente 124 im montierten Zustand der Abscheidevorrichtung 100 anliegen, so ausgebildet, dass durch das Verbinden der zwei Teile des Gehäuses 102 an dem Verbindungsabschnitt 106 auch die Endplattenelemente 124 und die Strömungselemente 112 in der gewünschten Stellung relativ zueinander festgelegt werden und sich insbesondere längs der Mittelachse 120 nicht mehr relativ zueinander bewegen können.

Das Gehäuse 102 bildet somit das Verbindungselement 139 zur Verbindung der Endplattenelemente 124 miteinander.

Im Übrigen stimmt die in Fig. 5 dargestellte zweite Ausführungsform der Abscheidevorrichtung 100 hinsichtlich Aufbau und Funktion mit der in den Fig. 1 bis 4 dargestellten ersten Ausführungsform überein, so dass auf deren vorstehende Beschreibung insoweit Bezug genommen wird.

Dadurch, dass bei sämtlichen beschriebenen Ausführungsformen mehrere baugleiche Strömungselemente 112 mit Vorsprüngen 160 und Aufnahmeabschnitten 168 vorgesehen sind, kann der Stapel 110 aus Strömungselementen 112 besonders einfach aufgebaut werden und zugleich eine zuverlässige, insbesondere selbstsichernde und verdrehsichere, Verbindung zwischen den Strömungselementen 112 geschaffen werden.

## Patentansprüche

1. Strömungselement (112) für eine Abscheidevorrichtung (100), umfassend einen scheibenförmigen Grundkörper (146), welcher eine erste Seite (150) und eine der ersten Seite (150) gegenüberliegende zweite Seite (152) umfasst,
wobei die erste Seite (150) und/oder die zweite Seite (152) mehrere Kanäle (154) umfasst, durch die im montierten Zustand des Strömungselements (112) in der Abscheidevorrichtung (100) ein Fluid von einer mittig in dem scheibenförmigen Grundkörper (146) angeordneten Zentralöffnung (114) des Grundkörpers (146) nach außen oder von außen zu der mittig angeordneten Zentralöffnung (114) führbar ist, wobei der Grundkörper (146) zumindest auf der ersten Seite (150) mehrere Aufnahmeabschnitte (168) und zumindest auf der zweiten Seite (152) mehrere Vorsprünge (160) umfasst,
wobei die Vorsprünge (160) im montierten Zustand des Strömungselements (112) mit den Aufnahmeabschnitten (168) eines im Wesentlichen baugleichen, auf das Strömungselement (112) aufgesetzten weiteren Strömungselements (112) in Eingriff bringbar sind,
**dadurch gekennzeichnet,**
**dass** die erste Seite (150) und die zweite Seite (152) jeweils mehrere Vorsprünge (160) und mehrere Aufnahmeabschnitte (168) umfassen, wobei die Aufnahmeabschnitte (168) in Kanalböden (162) der Kanäle (154) angeordnet sind.

2. Strömungselement (112) nach Anspruch 1, **dadurch gekennzeichnet, dass** die erste Seite (150) und die zweite Seite (152) jeweils mehrere Vorsprünge (160) und mehrere Aufnahmeabschnitte (168) umfassen, welche derart angeordnet sind, dass stets ein Vorsprung (160) der einen Seite (150, 152) des Grundkörpers (146) und ein Aufnahmeabschnitt (168) der anderen Seite (152, 150) des Grundkörpers (146) längs einer parallel zu einer Mittelachse (120) des Strömungselements (112) verlaufenden Richtung aufeinanderfolgend angeordnet sind.

3. Strömungselement (112) nach einem der Ansprüche 1 oder 2, **dadurch gekennzeichnet, dass** die erste Seite (150) des Grundkörpers (146) und/oder die zweite Seite (152) des Grundkörpers (146) eine in radialer Richtung (174) alternierende Folge von Vorsprüngen (160) und Aufnahmeabschnitten (168) umfasst.

4. Strömungselement (112) nach einem der Ansprüche 1 bis 3, **dadurch gekennzeichnet, dass** die Vorsprünge (160) und die Aufnahmeabschnitte (168) zumindest abschnittsweise komplementär zueinander ausgebildet sind.

5. Strömungselement (112) nach einem der Ansprüche 1 bis 4, **dadurch gekennzeichnet, dass** die im demontierten Zustand des Strömungselements (112) vorhandenen Kanäle (154) der ersten Seite (150) und/oder der zweiten Seite (152) im montierten Zustand mittels Trennwänden (156) zwischen den Kanälen (154) eines weiteren Strömungselements (112) längs einer Strömungsrichtung des Fluids in den Kanälen (154) geteilt, insbesondere halbiert, sind.

6. Strömungselement (112) nach einem der Ansprüche 1 bis 5, **dadurch gekennzeichnet, dass** das Strömungselement (112) stapelbar ausgebildet ist, so dass aus mehreren baugleichen Strömungselementen (112) ein Stapel (110) von Strömungselementen (112) herstellbar ist, in welchem die Vorsprünge (160) des einen Strömungselements (112) mit den Aufnahmeabschnitten (168) eines weiteren Strömungselements (112) in Eingriff sind.

7. Strömungselement (112) nach einem der Ansprüche 1 bis 6, **dadurch gekennzeichnet, dass** das Strömungselement (112) derart stapelbar ausgebildet ist, dass aus mehreren baugleichen Strömungselementen (112) ein koaxial zu einer gemeinsamen Mittelachse (120) angeordneter Stapel (110) von Strömungselementen (112) herstellbar ist.

8. Strömungselement (112) nach einem der Ansprüche 1 bis 7, **dadurch gekennzeichnet, dass**
a) die Kanäle (154) gekrümmt ausgebildet sind, insbesondere einen kreisevolventenförmigen Verlauf aufweisen; und/oder
b) die Vorsprünge (160) gekrümmt ausgebildet sind, insbesondere einen kreisevolventenförmigen Verlauf aufweisen; und/oder
c) die Aufnahmeabschnitte (168) gekrümmt ausgebildet sind, insbesondere einen kreisevolventenförmigen Verlauf aufweisen.

9. Strömungselement (112) nach einem der Ansprüche 1 bis 8, **dadurch gekennzeichnet, dass** das gesamte Strömungselement (112) einstückig ausgebildet ist.

10. Strömungselement (112) nach einem der Ansprüche 1 bis 9, **dadurch gekennzeichnet, dass** die Kanäle (154) des Strömungselements (112) einen senkrecht zu einer Strömungsrichtung des Fluids in den Kanälen (154) genommenen Querschnitt aufweisen, welcher längs der Strömungsrichtung im Wesentlichen konstant ist.

11. Strömungselement (112) nach einem der Ansprüche 1 bis 10, **dadurch gekennzeichnet, dass** die Vorsprünge (160) freie Enden (158) von Trennwänden (156) sind, weiche die Kanäle (154) in einer Richtung voneinander trennen, die senkrecht zu einer Strömungsrichtung des Fluids in den Kanälen (154) ausgerichtet ist.

12. Abscheidevorrichtung (100), insbesondere zum Abscheiden einer Flüssigkeit aus einem Gasstrom, umfassend einen Stapel (110) aus mehreren Strömungselementen (112) nach einem der Ansprüche 1 bis 11.

13. Abscheidevorrichtung (100) nach Anspruch 12, **dadurch gekennzeichnet, dass** die Abscheidevorrichtung (100) mindestens ein Endplattenelement (124) umfasst, welches den Stapel (110) aus Strömungselementen (112) in einer parallel zu einer Mittelachse (120) der Strömungselemente (112) verlaufenden Richtung begrenzt,
wobei das mindestens eine Endplattenelement (124) vorzugsweise eine im montierten Zustand der Abscheidevorrichtung (100) dem Stapel (110) aus Strömungselementen (112) zugewandte Seite (125) umfasst, welche im Wesentlichen dieselbe Form aufweist wie die dem mindestens einen Endplattenelement (124) abgewandte Seite (150, 152) eines an das Endplattenelement (124) angrenzenden Strömungselements (112).

14. Abscheidevorrichtung (100) nach einem der Ansprüche 12 oder 13,
**dadurch gekennzeichnet, dass** die Abscheidevorrichtung (100) zwei Endplattenelemente (124) umfasst, welche den Stapel (110) aus Strömungselementen (112) in einer parallel zu einer Mittelachse (120) der Strömungselemente (112) verlaufenden Richtung zu beiden Seiten des Stapels (110) begrenzen,
wobei die Abscheidevorrichtung (100) vorzugsweise ein Verbindungselement (139) umfasst, mittels welchem die zwei Endplattenelemente (124) miteinander verbunden und die Strömungselemente (112) zwischen den Endplattenelementen (124) aufeinandergedrückt werden, wobei das Verbindungselement (139) sich vorzugsweise längs der Mittelachse (120) erstreckt und/oder
durch ein Gehäuse (102) der Abscheidevorrichtung (100) gebildet ist.

15. Abscheidevorrichtung (100) nach einem der Ansprüche 12 bis 14,
**dadurch gekennzeichnet, dass** mittels der Zentralöffnungen (114) der Strömungselemente (112) ein sich längs einer Mittelachse (120) erstreckender Zentralkanal (116) der Abscheidevorrichtung (100) gebildet ist,
wobei der Zentralkanal (116) vorzugsweise im Wesentlichen zylinderförmig, hohlzylinderförmig oder konusförmig ausgebildet ist.

## Claims

1. Flow element (112) for a separation device (100), comprising a disc-shaped base body (146) which comprises a first side (150) and a second side (152) opposite the first side (150),
wherein the first side (150) and/or the second side (152) comprises a plurality of channels (154) through which, in the mounted condition of the flow element (112) in the separation device (100), a fluid is guidable outwards from a central opening (114) in the base body (146), which is arranged centrally in the disc-shaped base body (146), or from the outside towards the centrally arranged central opening (114),
wherein the base body (146) comprises a plurality of receiving portions (168) at least on the first side (150) and a plurality of projections (160) at least on the second side (152),
wherein, in the mounted condition of the flow element (112), the projections (160) are engageable with the receiving portions (168) of a further flow element (112) that is placed on the flow element (112) and is of substantially the same construction,
**characterized in that**
the first side (150) and the second side (152) each comprise a plurality of projections (160) and a plurality of receiving portions (168),
wherein the receiving portions (168) are arranged in channel bottoms (162) of the channels (154).

2. Flow element (112) in accordance with Claim 1, **characterized in that** the first side (150) and the second side (152) each comprise a plurality of projections (160) and a plurality of receiving portions (168) which are arranged such that a projection (160) of the one side (150, 152) of the base body (146) and a receiving portion (168) of the other side (152, 150) of the base body (146) are always arranged to succeed one another in a direction that runs parallel to a centre axis (120) of the flow element (112).

3. Flow element (112) in accordance with either of Clams 1 or 2,
**characterized in that** the first side (150) of the base body (146) and/or the second side (152) of the base body (146) comprises a succession of projections (160) and receiving portions (168) alternating in the radial direction (174).

4. Flow element (112) in accordance with any one of Claims 1 to 3,
**characterized in that** the projections (160) and the receiving portions (168) are constructed to be mutually complementary, at least in certain sections.

5. Flow element (112) in accordance with any one of Claims 1 to 4,
**characterized in that** the channels (154) in the first side (150) and/or the second side (152) that are present in the unmounted condition of the flow element (112) are divided, in particular bisected, in the mounted condition, along a direction of flow of the fluid in the channels (154), by means of separating walls (156) between the channels (154) of a further flow element (112).

6. Flow element (112) in accordance with any one of Claims 1 to 5,
**characterized in that** the flow element (112) is constructed to be stackable, such that a stack (110) of flow elements (112) is producible from a plurality of flow elements (112) of the same construction, and the projections (160) therein of the one flow element (112) engage with the receiving portions (168) of a further flow element (112).

7. Flow element (112) in accordance with any one of Claims 1 to 6,
**characterized in that** the flow element (112) is constructed to be stackable such that a stack (110) of flow elements (112) that is arranged coaxially in respect of a common centre axis (120) is producible from a plurality of flow elements (112) of the same construction.

8. Flow element (112) in accordance with any one of Claims 1 to 7,
**characterized in that**
a) the channels (154) are constructed to be curved, in particular to have a profile in the shape of a circle involute; and/or
b) the projections (160) are constructed to be curved, in particular to have a profile in the shape of a circle involute; and/or
c) the receiving portions (168) are constructed to be curved, in particular to have a profile in the shape of a circle involute.

9. Flow element (112) in accordance with any one of Claims 1 to 8,
**characterized in that** the whole flow element (112) is constructed in one piece.

10. Flow element (112) in accordance with any one of Claims 1 to 9,
**characterized in that** the channels (154) of the flow element (112) have a cross section, as seen perpendicular to a direction of flow of the fluid in the channels (154), which is substantially constant in the direction of flow.

11. Flow element (112) in accordance with any one of Claims 1 to 10,
**characterized in that** the projections (160) are free ends (158) of separating walls (156) which separate the channels (154) from one another in a direction that is oriented perpendicular to a direction of flow of the fluid in the channels (154).

12. Separation device (100), in particular for separating a liquid from a gas current, comprising a stack (110) of a plurality of flow elements (112) in accordance with any one of Claims 1 to 11.

13. Separation device (100) in accordance with Claim 12, **characterized in that** the separation device (100) comprises at least one end plate element (124) which delimits the stack (110) of flow elements (112) in a direction running parallel to a centre axis (120) of the flow elements (112), wherein the at least one end plate element (124) preferably comprises a side (125) which, in the mounted condition of the separation device (100), faces the stack (110) of flow elements (112) and has substantially the same shape as the side (150, 152) of a flow element (112) adjoining the end plate element (124) which is remote from the at least one end plate element (124).

14. Separation device (100) in accordance with either of Claims 12 or 13,
**characterized in that** the separation device (100) comprises two end plate elements (124) which delimit the stack (110) of flow elements (112) on both sides of the stack (110), in a direction running parallel to a centre axis (120) of the flow elements (112),
wherein the separation device (100) preferably comprises a connection element (139) by means of which the two end plate elements (124) are connected to one another and the flow elements (112) are pressed against one another between the end plate elements (124),
wherein the connection element (139) preferably extends along the centre axis (120) and/or
is formed by a housing (102) of the separation device (100).

15. Separation device (100) in accordance with any one of Claims 12 to 14,
**characterized in that** by means of the central openings (114) in the flow elements (112), a central channel (116) in the separation device (100) is formed, which extends along a centre axis (120),
wherein the central channel (116) is preferably constructed to be substantially in the shape of a cylinder, hollow cylinder or cone.

## Revendications

1. Elément d'écoulement (112) pour un dispositif de séparation (100), comprenant un corps de base (146) en forme de disque, lequel comprend un premier côté (150) et un second côté (152) opposé au premier côté (150),
dans lequel le premier côté (150) et/ou le second côté (152) comprend plusieurs canaux (154), à travers lesquels, dans l'état monté de l'élément d'écoulement (112) dans le dispositif de séparation (100), un fluide peut être guidé depuis une ouverture centrale (114) du corps de base (146), disposée au milieu dans le corps de base (146) en forme de disque, vers l'extérieur ou depuis l'extérieur vers l'ouverture centrale (114) disposée au milieu, dans lequel le corps de base (146) comprend au moins sur le premier côté (150) plusieurs sections de logement (168) et au moins sur le second côté (152) plusieurs saillies (160),
dans lequel les saillies (160) peuvent être amenées en prise dans l'état monté de l'élément d'écoulement (112) avec les sections de logement (168) d'un autre élément d'écoulement (112) sensiblement de structure identique, placé sur l'élément d'écoulement (112),
**caractérisé en ce**
**que** le premier côté (150) et le second côté (152) comprennent respectivement plusieurs saillies (160) et plusieurs sections de logement (168), dans lequel les sections de logement (168) sont disposées dans des fonds de canal (162) des canaux (154).

2. Elément d'écoulement (112) selon la revendication 1, **caractérisé en ce que** le premier côté (150) et le second côté (152) comprennent respectivement plusieurs saillies (160) et plusieurs sections de logement (168), lesquelles sont disposées de telle manière que systématiquement une saillie (160) d'un côté (150, 152) du corps de base (146) et une section de logement (168) de l'autre côté (152, 150) du corps de base (146) sont disposées de manière à se suivre le long d'une direction s'étendant de manière parallèle à un axe milieu (120) de l'élément d'écoulement (112).

3. Elément d'écoulement (112) selon l'une quelconque des revendications 1 ou 2, **caractérisé en ce que** le premier côté (150) du corps de base (146) et/ou le second côté (152) du corps de base (146) comprend une succession en alternance, dans la direction radiale (174), de saillies (160) et de sections de logement (168).

4. Elément d'écoulement (112) selon l'une quelconque des revendications 1 à 3, **caractérisé en ce que** les saillies (160) et les sections de logement (168) sont réalisées au moins par endroits de manière complémentaire les unes par rapport aux autres.

5. Elément d'écoulement (112) selon l'une quelconque des revendications 1 à 4, **caractérisé en ce que** les canaux (154), présents dans l'état démonté de l'élément d'écoulement (112), du premier côté (150) et/ou du second côté (152) sont divisés, en particulier en deux, dans l'état monté, au moyen de cloisons de séparation (156) entre les canaux (154) d'un autre élément d'écoulement (112) le long d'une direction d'écoulement du fluide dans les canaux (154).

6. Elément d'écoulement (112) selon l'une quelconque des revendications 1 à 5, **caractérisé en ce que** l'élément d'écoulement (112) est réalisé de manière à pouvoir être empilé de sorte qu'une pile (110) d'éléments d'écoulement (112) peut être fabriquée à partir de plusieurs éléments d'écoulement (112) de structure identique, dans laquelle les saillies (160) d'un élément d'écoulement (112) sont en prise avec les sections de logement (168) d'un autre élément d'écoulement (112).

7. Elément d'écoulement (112) selon l'une quelconque des revendications 1 à 6, **caractérisé en ce que** l'élément d'écoulement (112) est réalisé de manière à pouvoir être empilé de telle manière qu'une pile (110) d'éléments d'écoulement (112), disposée de manière coaxiale par rapport à un axe milieu (120) commun, peut être fabriquée à partir de plusieurs éléments d'écoulement (112) de structure identique.

8. Elément d'écoulement (112) selon l'une quelconque des revendications 1 à 7, **caractérisé en ce que**
a) les canaux (154) sont réalisés de manière incurvée, en particulier présentent un profil en forme de développante de cercle ; et/ou
b) les saillies (160) sont réalisées de manière incurvée, en particulier présentent un profil en forme de développante de cercle ; et/ou
c) les sections de logement (168) sont réalisées de manière incurvée, en particulier présentent un profil en forme de développante de cercle.

9. Elément d'écoulement (112) selon l'une quelconque des revendications 1 à 8, **caractérisé en ce que** l'ensemble de l'élément d'écoulement (112) est réalisé d'un seul tenant.

10. Elément d'écoulement (112) selon l'une quelconque des revendications 1 à 9, **caractérisé en ce que** les canaux (154) de l'élément d'écoulement (112) présentent une section transversale prise de manière perpendiculaire par rapport à une direction d'écoulement du fluide dans les canaux (154), laquelle est sensiblement constante le long de la direction d'écoulement.

11. Elément d'écoulement (112) selon l'une quelconque des revendications 1 à 10, **caractérisé en ce que** les saillies (160) sont des extrémités (158) libres de cloisons de séparation (156), lesquelles séparent les canaux (154) dans une direction les uns des autres, qui sont orientés de manière perpendiculaire par rapport à une direction d'écoulement du fluide dans les canaux (154).

12. Dispositif de séparation (100), en particulier servant à séparer un liquide d'un flux de gaz, comprenant une pile (110) composée de plusieurs éléments d'écoulement (112) selon l'une quelconque des revendications 1 à 11.

13. Dispositif de séparation (100) selon la revendication 12, **caractérisé en ce que** le dispositif de séparation (100) comprend au moins un élément de plaque d'extrémité (124), lequel délimite la pile (110) composée d'éléments d'écoulement (112) dans une direction s'étendant de manière parallèle à un axe milieu (120) de l'élément d'écoulement (112),
dans lequel l'au moins un élément de plaque d'extrémité (124) comprend de préférence un côté (125) tourné dans l'état monté du dispositif de séparation (100) vers la pile (110) composée d'éléments d'écoulement (112), lequel présente sensiblement la même forme que le côté (150, 152), opposé à l'au moins un élément de plaque d'extrémité (124), d'un élément d'écoulement (112) jouxtant l'élément de plaque d'extrémité (124).

14. Dispositif de séparation (100) selon l'une quelconque des revendications 12 ou 13, **caractérisé en ce que** le dispositif de séparation (100) comprend deux éléments de plaque d'extrémité (124), lesquels délimitent la pile (110) composée d'éléments d'écoulement (112) dans une direction s'étendant de manière parallèle à un axe milieu (120) des éléments d'écoulement (112) vers les deux côtés de la pile (110),
dans lequel le dispositif de séparation (100) comprend de préférence un élément de liaison (139), au moyen duquel les deux éléments de plaque d'extrémité (124) sont reliés entre eux et les éléments d'écoulement (112) sont poussés les uns sur les autres entre les éléments de plaque d'extrémité (124),
dans lequel l'élément de liaison (139) s'étend de préférence le long de l'axe milieu (120) et/ou est formé par un boîtier (102) du dispositif de séparation (100).

15. Dispositif de séparation (100) selon l'une quelconque des revendications 12 à 14, **caractérisé en ce qu'**un canal central (116) du dispositif de séparation (100) s'étendant le long d'un axe milieu (120) est formé au moyen des ouvertures centrales (114) des éléments d'écoulement (112),
dans lequel le canal central (116) est réalisé de préférence sensiblement sous forme de cylindre, sous forme de cylindre creux ou sous forme de cône.
